# EUROPÄISCHE PATENTANMELDUNG

(11) **EP 1 973 017 A2**
(43) Veröffentlichungstag der Anmeldung: **24.09.2008**
(21) Anmeldenummer: 08003890.4
(22) Anmeldetag: 03.03.2008
(51) Int. Cl.: G05B 19/042

(54) **Sicherheitsgerichtete speicherprogrammierte Steuerung**

(30) Priorität: 22.03.2007 DE 102007014478
(71) Anmelder: ABB AG, 68309 Mannheim (DE)
(72) Erfinder: Draht, Rainer, Dr.-Ing., 69469 Weinheim (DE); Orth, Philipp, Dr.-Ing., 52070 Aachen (DE); Veryha, Yauheni, Dr., 68161 Mannheim (DE)
(74) Vertreter: Miller, Toivo

(57) **Zusammenfassung**

Die Erfindung bezieht sich auf eine sicherheitsgerichtete speicherprogrammierte Steuerung (S-SPS) mit nur einer Zentraleinheit (CPU), wobei die Zentraleinheit (CPU) mindestens einen Multi-Kern-Prozessor (Prozessor) mit zwei oder mehreren Prozessorkernen (Kern 1, Kern 2) enthält. Wenigstens einer der Prozessorkerne (z. B. Kern 1) ist für die Bearbeitung einer klassischen Steuerungssoftware oder Automatisierungssoftware vorgesehen, und wenigstens ein weiteren Prozessorkern (z. B. Kern 2) für die Bearbeitung der Software für sicherheitsgerichtete Funktionen.

## Beschreibung

Die Erfindung bezieht sich auf eine speicherprogrammierte Steuerung SPS, die als sicherheitsgerichtete Steuerung S-SPS ausgeführt ist. Solche sicherheitsgerichteten speicherprogrammierten Steuerungen S-SPS finden als Maschinensteuerung oder allgemein in Prozesssteuerungsanlagen Anwendung.

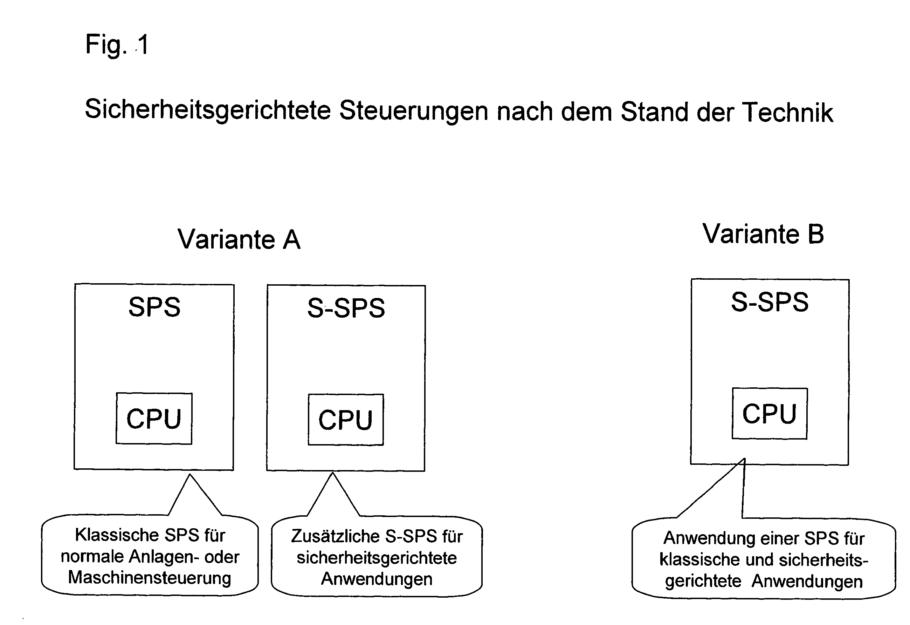

Für technische Anlagen werden zunehmend außer der klassischen Steuerung zusätzlich auch sicherheitsgerichtete Steuerungsfunktionen benötigt. Um diesen Anforderungen zu entsprechen sind grundsätzlich zwei Systemvarianten bekannt, die in Fig. 1 als Varianten A und B dargestellt sind, nämlich entweder die Anordnung von zwei vollständigen Steuerungssystemen oder der Einsatz einer einzigen, mit Sicherheitsfunktionen ergänzten Steuerung.

Bei der Variante A ist eine klassische speicherprogrammierte Steuerung SPS für die üblichen Steuerungsaufgaben eingesetzt. Zusätzlich ist eine weitere Steuerung mit ebenfalls eigener Zentraleinheit CPU angeordnet, die unter Berücksichtigung von Sicherheitsanforderungen zur sicherheitsgerichteten Steuerung S-SPS ertüchtigt ist. Eine solche Lösung ist besonders sicher und kann auch die Verfügbarkeit der gesamten Steuerung erhöhen. Allerdings handelt es sich dabei um eine relativ teuere Lösung. Zur Variante A kann auch ein aus DE 10 2005 009 795 A1 bekanntes Mikroprozessorsystem gezählt werden, beim dem neben einer üblichen Mikroprozessorsteuerung mindestens ein zusätzlicher Mikroprozessor mit ebenfalls eigenem Programm/Datenspeicher als Sicherheitsprozessor eingesetzt ist. Die beiden so gebildeten Controller arbeiten auf einen gemeinsamen Bus. Für ein solches System ist eine spezielle Hardware-Architektur erforderlich.

Bei Variante B ist nur eine Steuerungseinrichtung mit nur einer CPU vorhanden, wodurch das System besonders preiswert ist. Auf der einzigen CPU läuft sowohl der klassische Control-Code, als auch der Safety-Code, der aus speziellen sicherheitsgerichteten Bausteinen aus einer Safety-Bibliothek aufgebaut ist. Der Variante B kann eine aus DE 43 12 305 C2 bekannte sicherheitsgerichtete speicherprogrammierte Steuerung zugeordnet werden, bei der die einzige Zentraleinheit allein durch sicherheitsgerichtete Programm-Module ergänzt ist, die sich auf sicherheitsgerichtete Anwenderfunktionen, eine Überwachung von sicherheitsgerichteten E/A-Geräten sowie auf eine Eigenüberwachung der Zentraleinheit beziehen. Bei einem aus EP 1 517 200 A1 bekannten Safety Controller sind zwei Prozessoren eingesetzt. Sicherheitsprogramme laufen auf beiden Prozessoren, Standardprogramme aber nur auf einem der Prozessoren. Entsprechend werden auch zwei Speicher genutzt. Damit und mittels einem Synchronisationsprogramm sollen eventuelle Verfälschungen der Sicherheitsprogramme erkannt werden.

Der Erfindung liegt die Aufgabe zugrunde, ausgehend von der an sich schon kostengünstigen Variante B eine sicherheitsgerichtete speicherprogrammierte Steuerung anzugeben, die mit noch geringeren Kosten realisierbar ist. Außerdem soll eine solche Steuerung mit einer erhöhten Sicherheitsstufe angegeben werden.

Diese Aufgabe wird durch eine sicherheitsgerichtete speicherprogrammierte Steuerung mit den im Anspruch 1 angegebenen Merkmalen gelöst. Vorteilhafte Ausgestaltungen sind in weiteren Ansprüchen angegeben.

Mit der Erfindung wird eine sicherheitsgerichtete speicherprogrammierte Steuerung mit nur einer Zentraleinheit vorgeschlagen, die mindestens einen Multi-Kern-Prozessor mit zwei oder mehreren Prozessorkernen enthält. Wenigstens einer der Prozessorkerne ist für die Bearbeitung einer klassischen Steuerungssoftware oder Automatisierungssoftware eingerichtet, und wenigstens ein weiterer Prozessorkern ist für die Bearbeitung der Software für sicherheitsgerichtete Funktionen eingerichtet.

Die weitere Beschreibung der Erfindung und deren Vorteile sowie deren Ausgestaltungen erfolgt nachstehend anhand von Ausführungsbeispielen und anhand der Zeichnungsfiguren.

Es zeigen:
- Fig. 1: Varianten A und B von bekannten Steuerungen, und
- Fig. 2: eine Prinzipdarstellung einer erfindungsgemäßen Steuerung.

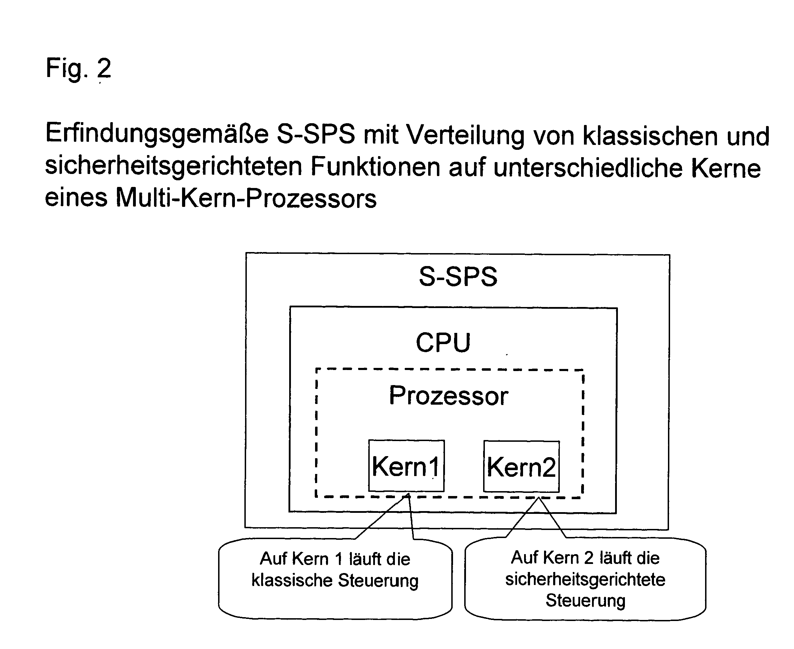

Fig. 2 zeigt eine sicherheitsgerichtete speicherprogrammierte Steuerung S-SPS mit einer einzigen Zentraleinheit CPU. Die Zentraleinheit weist einen in der Zeichnung mit Prozessor bezeichneten Multi-Kern-Prozessor auf, der zwei mit Kern 1 und Kern 2 bezeichnete Prozessorkerne enthält. Auf einem der Prozessorkerne, beispielsweise dem ersten Prozessorkern Kern 1 läuft eine Automatisierungssoftware, auf dem anderen Prozessorkern eine Sicherheitssoftware. Eine solche Steuerungseinrichtung ist besonders kostengünstig ausführbar, da lediglich Standardkomponenten benötigt werden. Dabei ist trotz des Einsatzes nur eines Mikroprozessors eine architektonisch einwandfreie Lösung erreichbar. Die Sicherheitssoftware kann aufgrund der Softwareaufteilung auf zwei Kerne nicht durch die Automatisierungssoftware verändert werden. Die Aufteilung reduziert auch die Prozessorlast beider Anwendungen. Darüber hinaus kann der sicherheitsgerichtete Teil der Steuerung den klassischen Steuerungsteil parallel überwachen, ohne den normalen Steuerungsablauf zu unterbrechen. Somit wird trotz reduziertem Hardware-Aufwand die Sicherheit des gesamten Systems erhöht.

Je nach Umfang der Automatisierungssoftware und/oder der Sicherheitssoftware kann auch ein Multi-Kern-Prozessor mit mehr als zwei Prozessorkernen eingesetzt werden, oder eine Kombination eines Multi-Kern-Prozessors mit einem oder mehreren Multi-Kern-Prozessoren oder einfachen Prozessoren. Beim Einsatz von mehr als einem Prozessor kann zur Erhöhung der Zuverlässigkeit eine Spannungsversorgung aus unterschiedlichen Spannungsquellen vorgesehen werden.

## Patentansprüche

1. Sicherheitsgerichtete speicherprogrammierte Steuerung (S-SPS) mit nur einer Zentraleinheit (CPU), wobei die Zentraleinheit (CPU) mindestens einen Multi-Kern-Prozessor (Prozessor) mit zwei oder mehreren Prozessorkernen (Kern 1, Kern 2) enthält.

2. Steuerung nach Anspruch 1, **dadurch gekennzeichnet, dass** wenigstens einer der Prozessorkerne (z. B. Kern 1) für die Bearbeitung einer klassischen Steuerungssoftware oder Automatisierungssoftware eingerichtet ist, und wenigstens ein weiteren Prozessorkern (z. B. Kern 2) für die Bearbeitung der Software für sicherheitsgerichtete Funktionen eingerichtet ist.

3. Steuerung nach Anspruch 1, **dadurch gekennzeichnet, dass**
a) die Zentraleinheit (CPU) wenigstens einen Multi-Kern-Prozessor (Prozessor) und wenigstens einen zweiten Mikroprozessor, der als Standard-Mikroprozessor oder ebenfalls als Multi-Kern-Prozessor ausgeführt ist, enthält,
b) wenigstens einer der Mikroprozessoren, z. B. ein Multi-Kern-Prozessor (Prozessor) für die Bearbeitung einer klassischen Steuerungssoftware oder Automatisierungssoftware eingerichtet ist, und aus einer ersten Spannungsquelle versorgt ist, und
c) wenigstens ein weiterer Mikroprozessor, z. B. ein Standard-Mikroprozessor für die Bearbeitung der Software für sicherheitsgerichtete Funktionen eingerichtet ist, und aus einer zweiten Spannungsquelle versorgt ist.
